Europäisches Patentamt

European Patent Office

Office européen des brevets

(19)

(11) Publication number: **0 225 810 B1**

## (12) EUROPEAN PATENT SPECIFICATION

(45) Date of publication of patent specification: **02.05.91**   (51) Int. Cl.⁵: **B65G  47/46**

(21) Application number: **86401914.6**

(22) Date of filing: **01.09.86**

(54) **Improvements in selective ejection conveyors.**

(30) Priority: **04.12.85 US 804437**

(43) Date of publication of application:
**16.06.87 Bulletin  87/25**

(45) Publication of the grant of the patent:
**02.05.91 Bulletin  91/18**

(84) Designated Contracting States:
**AT BE CH DE FR GB IT LI LU NL SE**

(56) References cited:
**DE-A- 2 108 023**
**DE-A- 2 803 223**
**DE-A- 3 310 479**
**GB-B- 1 257 753**

(73) Proprietor: **SOCIETE DES PRODUITS NESTLE S.A.**
**Case postale 353**
**CH-1800 Vevey(CH)**

(72) Inventor: **Aquino, Agostino**
**182 Cumberland Avenue**
**Paterson New Jersey 07502(US)**
Inventor: **Polifroni, Nicholas**
**16 Edgewater Road**
**Cliffside Park New Jersey 07010(US)**

(74) Representative: **Bonnetat, Christian**
**CABINET BONNETAT 23, Rue de Léningrad**
**F-75008 Paris(FR)**

## Description

The invention relates to ejection devices for use in a production line. This invention also relates to devices for supporting a movable endless chain and the like.

This invention may be used with conveyors having a plurality of rows of articles and especially food articles.

It is well-known to use sprockets and rollers for use with chains, so as to support an endless chain or belt for movement through an endless path. It is also well-known to use sprocket teeth to engage the spaces between the individual elements forming a typical chain. Such chains are commonly used with bicycles, and such chains have the advantage of being relatively, precisely controllable through the use of individual sprocket teeth, and durable.

It is well-known to use pivoting members in connection with conveyor belts. The prior art pivoting members for use with conveyor belts cannot be used with multiple rows which are closely spaced, without suffering sufficient downtime losses due to breaking of an individual one of the conveyor belts.

Maintenance of and replacement of a single individual conveyor belt on a pivoting section in the prior art would require removal of the entire drive shaft, making necessary extensive disassembly and re-assembly operations where the individual belt is for example between other conveyor belts rather than on the end. This lack of accessability, in a practical sense, limits the number of rows of articles which can be handled by such a pivoting conveyer system. Also, since the prior art pivoting conveyor members are difficult to maintain when a belt breaks, they may be undesirable for use in a high production system where there is only limited storage for articles coming off the conveyor belts, and which articles cannot be processed during the maintenance time. Furthermore, the prior art pivoting conveyor belts do not provide for rapid replacement of an integral belt, but would require use of a spliced belt which is stretched around the rollers and then joined in place. Such spliced belts do not last as long as integral belts which have been formed as a continuous band.

U.S. - A - 3,404,775 shows in Figure 2 a linearly-movable arm which causes pivoting of an arm which in turn causes pivoting of a conveyor belt. Pivoting causes dropping of a brick between two adjacent conveyor belts. Two different pivoting conveyor belt sections must be pivoted in order for a brick to drop. These pivoting conveyor belt segments can be actuated by electrical, pneumatic, or other signals to drop selected bricks upon crosswise-moving belts to classify bricks according to color, finish, or other characteristics. However, this patent does not teach or suggest mounting a plurality of closely-spaced conveyor members for selective pivoting (or other movement) out of a conveyor path to permit dropping of selected articles, wherein the closely-spaced conveyor means are driven in such a manner as to render any single one of the closely-spaced conveyor means replaceable with a continuous band conveyor means.

US-A-4,426,074 teaches a pivoting conveyor belt segment having an actuator for clearing spoiled items from an overlapped stream of paper products. A three-flight conveyor belt transporting system is rocked bodily, so as to have an upper and a lower position, so that a continuous stream of spoiled items can be transferred downwardly under the next flight to a separate delivery. A sensor such as a photoelectric cell together with a processing unit is capable of actuating a solenoid of valve, so as to drive cylinder. However, there is no teaching or suggestion of a plurality of commonly-driven conveyor means segments which are selectively movable out of a conveying relationship and which are so connected with a drive means that any single belt can be replaced with a continuous belt without removing any other parts.

US-A-4,424,966 teaches a cylinder which causes pivoting of a conveyor belt segment between an upper conveying and a lower position. When the conveyor belt is in the lower position, a rake forms a bridge between the pulleys and a T-shaped member to support books from a binder on the upstream portion of the conveyor. The articles so supported by the rake are thus in place ready to move the conveyor end portion returns to its horizontal position.

Other patents showing related types of conveying and diverting devices are shown in patents US-A-4,166,525 ; US-A-3,640,372 ; US-A-4,499,988 ; US-A-4,130,193 ; US-A-3,354,613 ; US-A-1,762,772 ; US-A-828,296 ; and US-A-2,675,118.

Moreover, US-A-4,426,074 describes a diverting conveyor for selectively diverting articles from a conveyor path to a second location where the diverting conveyor includes a movable support member having a drive sprocket and a conveyor chain support mounted thereon ; a continuous conveyor means disposed on the drive sprocket and conveyor chain support to form a continuous closed loop and define a diverting conveying surface ; actuator means to move the movable support member and diverting conveying surface from a first conveying position to a second conveying position to selectively divert articles from the conveyor path to the second location; and a drive means in a continuous driving relationship with the drive sprocket.

The aim of the present invention is to improve such a diverting conveyor.

To this end, the diverting conveyor of the above type is, according to the invention, characterized in that the conveyor means is a continuous conveyor chain received on the conveyor chain support, wherein the support member and conveyor chain support is a solid block and said drive means is disposed outside the closed loop of the conveyor chain, and wherein the drive sprocket is rotatably mounted to the support member and extends essentially perpendicular from the support member such that the continuous conveyor chain can be removed or replaced without disassembly of the diverting conveyor.

In the present invention, the most important feature is the provision of a solid block of material rather than rollers for supporting the endless chain in about various curves. The use of a solid block, having a raised ridge for guiding the chain and supporting it upon the central chain connecting link, results in reduced maintenance time, and, where a low-friction material such as a plastic is used, can also result in reduced operating expenses.

Preferably, said conveyor chain support includes a guide rail for receiving said chain. Said chain may include at least one cleaning element fixed to the side of said chain whereby debris is removed from the support during movement of the chain.

In a preferred embodiment, the drive means is a rotatable drive shaft essentially parallel to the axis of the drive sprocket and operatively connected thereto. Said drive shaft may include a drive gear mounted on the rotatable drive shaft and is operatively connected to a gear connected to the drive sprocket mounted to the support member.

The actuating means is preferably a double-acting pneumatic cylinder and is selectively actuable between an extended position and a retracted position.

Advantageously, a plurality of parallel spaced-apart independently movable support members are provided, each of said support members having at least one rotatable drive sprocket and a conveyor chain support extending perpendicular from the plane of the support member and supporting the conveyor chain, the support members being spaced apart a sufficient distance such that the conveyor chain can be removed or replaced without disassembly of the diverting conveyor. The drive means may include a drive shaft having a plurality of drive gears and each drive sprocket includes a gear fixed at the end thereof and is operatively connected to one of the plurality of drive gears. The support members are pivotally mounted to the drive shaft such that the support members are pivotable about the drive shaft between the first conveying position to the second conveying position.

The conveyor chain support may include two parallel guide rails to support a pair of cooperating conveyor chains.

Said drive sprocket and conveyor chain support are arranged to define a first conveying run of the conveyor chain over the conveyor chain support and a second conveying run of the conveyor chain extending from the conveyor chain support to the drive sprocket.

Preferably, the conveyor includes a sensing means to detect a preselected characteristic of an article being conveyed in the conveyor path and to produce a first signal corresponding to said characteristic, a signal processor to receive said first signal and to produce a second signal, and a control means to receive said second signal and selectively actuate the actuator means of one or more of the diverting conveyors.

The support member may be pivotal about the drive shaft and pivotal from the first conveying position to the second conveying position.

A computer or signal processor can be used in combination with any known type of sensor appropriate for the articles conveyed, in order to selectively actuate any one or ones of the diverting members to permit diversion of individual selected articles.

BRIEF DESCRIPTION OF THE DRAWINGS

Figure 1 shows a front elevational view of a diverting member used in the present invention;

Figure 2 is a top elevational view of the diverting device according to the present invention;

Figure 3 is a side view, partially in section, along line 3-3 of figure 1, showing two diverting members arranged as used;

Figure 4 is a front elevational view of an inventive chain support for use as a conveying apparatus;

Figure 5 is a sectional side view taken along line 5-5 of figure 4;

Figure 6 is a side elevational view of the chain shown in figure 5 and the support and guide thereon;

Figure 7 is an end elevational view of the support according to the present invention with the chains removed;

Figure 8 is a top elevational view of the chain support, showing a pair of support cleaning elements associated with each respective chain.

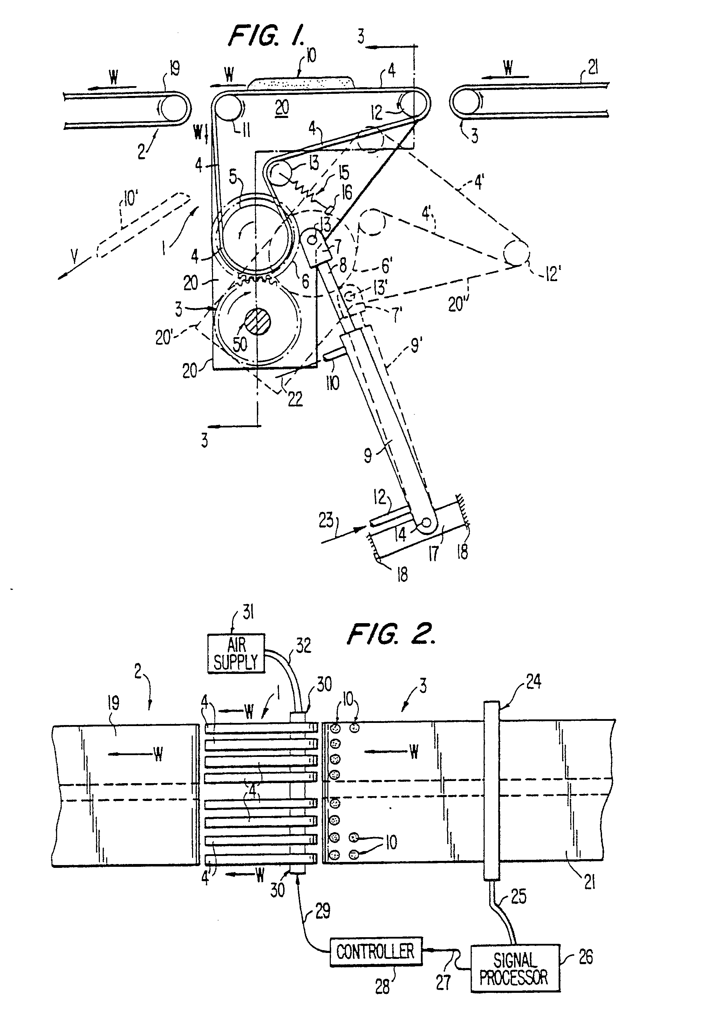

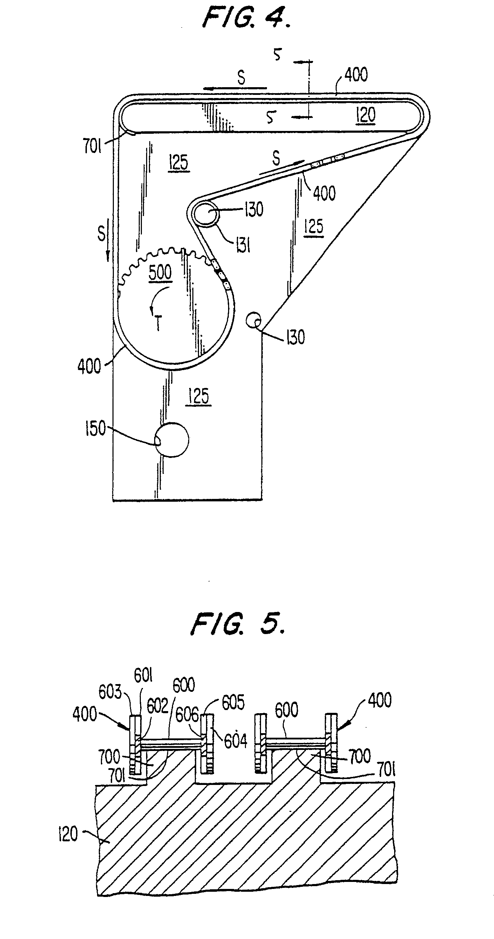

It will be noted that figures 1 to 3 are used for general explanation and do not show the invention, which is shown by figures 4 to 8.

DETAILED DESCRIPTION OF THE INVENTION

Figure 1 shows the front elevational view of a diverting member 1. The diverting member 1 includes a support plate 20. The support plate 20 is closely rotatably mounted about a drive shaft 50. The support plate 20 is pivotally connected by a pin 13 to a collar 7. The collar 7 is supported by a shaft 8 and an air cylinder 9.

The air cylinder 9 in the preferred embodiment is a Clippard pneumatically-driven cylinder UDR-12 having a 20 mm bore and a 50 mm stroke. The air cylinder 9 is preferably double acting so as to provide a positive force for moving the shaft 8 in both directions. The air cylinder 9 is pinned at its lower end by a pin 14 to a support member 17 connected to a fixed support 18 represented schematically in Figure 1. The air cylinder 9 has an upper air inlet 110 and a lower air inlet 12. Air flow is indicated schematically by arrow 22 and arrow 23 for respective inlets 110 and 12.

The diverting member 1 is in bridging relationship between a downstream conveyor belt 2 and an upstream conveyor belt 3. The conveyor belt 2 has a belt 19, and the conveyor belt 3 has a belt 21. Both of the belts 19, 21 move with a speed W as indicated by the arrows in Figure 1; however, it is contemplated as being within the scope of the present invention that the conveyor belts 19 and 21 may move at differing speeds, which differing speeds can be used to adjust the spacing between articles. It is also contemplated as being within the scope of the present invention that the conveyor means 4 can move at different speeds than the belts 19 and 21, if desired. As seen in Figure 1, an article 10, such as candy bar or other article, has passed from conveyor belt 21 and onto a conveyor means 4 which is part of the diverting member 1. For reasons of simplicity in figures 1 to 3 the conveyor means 4 is depicted as a conveyor belt contrary to what is claimed by the invention.

The conveyor means 4 is supported by a roller 11 and a roller 12, both of which are rotatably mounted for rotation about each respective roller axis, upon the plate 20. Additionally, a tensioning roller 13 is slidably and rotatably mounted for contact with the means 4 by a spring member 15 which is fixably connected at its other end to a support block 16. The support 16 in turn is fixed to the pipe 20. The tensioning roller 13 is not necessary and omission of a tensioning roller from any embodiment shown, or inclusion with any embodiment, is contemplated as being within the scope of the present invention.

A gear 6 is rotatably fixed about its axis to the plate 20, and is fixedly connected against relative rotation to a driven roller 5. Any alternative means of connection can also be used, such as reduction gearing, or other connecting means between the gear 6 and the roller 5. A drive gear 3 is in contact with the driven gear 6, the drive gear 3 being fixedly connected as by a pin, welding, or the like to a drive shaft 50. Thus, the drive gear 3 rotates relative to the plate 20 but gear 3 is fixed to the shaft 50 for rotation therewith.

While an air cylinder has been described in the preferred embodiment, any actuating device can be used instead, such as a solenoid, a magnetically-actuated device, or a mechanical device, or any other device capable of moving the device 1 between two positions. The air supply to either the top or the bottom air cylinder 9 is supplied from an air supply. Flow into or out of the port 110 and 12 is preferably valved by a solenoid-actuated valve or the like. An air cylinder 9 has been chosen in the preferred embodiment for maintainability and reliability, however any other actuating devices can be used in the present invention.

Further, while a plate 20 is shown, any support structure can be used instead, including curved, prismatic, or other shapes; and any forming means can be used for the member 20 or alternatives thereof, including but not limited to molding, casting, cutting, metalworking, or other forming means.

The support plate 20 is preferably made of strong, light-weight material such as aluminum, but it can also be made of steel, plastic, wood, or any other material sufficiently strong to support rollers and a conveyor belt. The rollers are preferably any conventional roller formed of wood, plastic, steel, aluminum, or the like and are mounted for rotation by bearing members. Such bearing members may include, for example, a low-friction material such as nylon or Teflon, ball bearings, journal bearings, or any other type of bearing known to those skilled in the bearing art. The belt 4 is preferably a flat urethane endless belt, such as those well-known in the art. However, any type of belt and belt material, including woven cloth, plastic, rubber, steel mesh or the like can be used with the present invention. Furthermore, while endless belts are preferred in the present invention for greater reliability and longer life, seamed belts can be used as well. Such seamed belts are usually made by splicing or by similar operations, and are generally inherently weaker and have a shorter life than endless belts which have no seams.

Figure 1 shows the second position of the diverting member 1 in dotted outline. The gears 3 and 6 have meshing teeth (the teeth or omitted from the drawings for clarity). As seen by the dotted outline the gear 6 pivots to its position indicated by 6', which remains in toothed, engaging contact with the gear 3. The gear 3 does not rotate with the plate but rather with the shaft. Therefore, the roller 3 remains in driving relationship with the gear 6 throughout the pivoting operation. When the diverting member 1 is in its second, diverting position as indicated in dotted line, a subsequent article 10′ passes between the conveyors 2 and 3 as indicated by the position shown in dotted outline in Figure 1. The article 10′ is indicated as having a velocity V, which is a combination of a forward velocity W and a downward component of velocity due to gravity.

The diverted article can fall downwardly into any type of receptacle. Furthermore, the diverted article 10′ can fall upon a chute, another conveyor belt, or a shredder, among other devices, for further processing. All such further steps are contemplated as being within the scope of the present invention.

The diverting member 1 remains in its initial position shown in solid outline in Figure 1 until a signal is received to divert an article 10′, whereupon a diverting member 1 is moved to its second position as shown in dotted outline. After the article has been diverted, the air cylinder 9 is actuated to return the diverting member 1 to its first position as shown in solid outline.

Figure 2 is a top elevational view of the diverting member 1, and the conveyor belts 2 and 3. Schematically indicated in Figure 2 is a sensing device 24 for sensing each of the individual ones of the articles 10, and a signal processor 26 for processing signals received from the sensor 24. A controller 28 is also schematically indicated, for controlling a mechanism 30 which selectively actuates any one or ones of the air cylinders 9 to act upon respective diverting members 1. Also indicated schematically is an air supply 31 for supplying air to the air cylinders 9. Any air supply source, such as a storage tank, compresser, or the like can be used in the present invention.

The conveyor belts 2 and 3, as well as the diverting members 1, are shown as being broken way in dotted outline along a longitudinal centerline. The broken away portion indicates that an arbitrary number of additional members or additional width of conveyor belt can be used, as appropriate. Also, a lesser number of rows and a lesser number of diverting members, as well as a lesser width of conveyor belt, can be used. All such variations are contemplated as being within the scope of the present invention. In the preferred embodiment, twenty four diverting members are arranged to be driven simultaneously by a single shaft 50. Each diverting members 1 receives articles from a single row of articles from the conveyor belt 21. When an article 10 to be diverted is sensed by the sensing member 24, the signal processor 26, having received signals along the pathway 25, determines the appropriate time for actuating a diverting device 1, and also selects one of the diverting devices 1 to be actuated. More than one diverting member 1 can be actuated selectively simultaneously, depending upon the articles 10 arriving at the diverting devices 1. The signal processor 26 takes into account the belt speed W of the belt 21, the position of the sensed article 10 which is to be diverted, and computes the desire to time at which the particular diverting device 1 is to be actuated.

The signal processor 26 in the preferred embodiment is a computer. Instructions are preferably programmed into the computer, which preferably compares the sensed information about the articles 10 with predetermined "acceptable" range for the particular attribute sensed. For example, if color is sensed, a particular degree of browning, or a particular shade of color may be optimum, but there is ordinarily an acceptable range of browning, or of colors, such that outside the range, articles 10 are to be rejected. Additional sensors can also be employed, for example, weight, shape, composition, etc., which sensors also would send signals to the signal processor 26. Thus, any number of sensing devices can be used, such as an ultrasonic thickness measuring device, an infrared scanner, a television camara, a salinity meter, a magnetic sensor, or the like can all be used. Thus, any number of sensing devices can be employed, the signal processor 26 accepting signals from all of the sensors and diverting articles 10 if the individual article 10 to be diverted fails to fall within the predetermined range of values sensed by the sensing devices 24.

The signal processor 26 can preferably include a vision processor for comparing image information received from imaging devices such as television cameras or the like, and comparing the images to a number of predetermined acceptable images, for determining whether or not to divert a particular article 10. The signal processor computes, based upon empirical data, theoretical equations, and other sensed imputs such as conveyor belt speeds of the belts 21 and 19, as well as any other conditions which are to be sensed, and sends its processed output signals (decisions) by pathway 27 to a controller 28.

Controller 28 can also be a computer, or it can be an analog controlled device. Furthermore the controller 28 can be a part of the signal processor 26 if desired. The controller 28 supplies signals and/or power to actuate individual ones of the diverting members 1 shown in Figure 2. Such controllers are well-known in the art, and any controller for selectively actuating one of a plurality of actuatable devices can be used with the present invention. In the preferred embodiment, the controller supplies electrical power to solenoids which control air flow to the individual air inlets 110 and 12 of the cylinder 9.

While a preferred embodiment of actuator 9 controller 28 signal processor 26 and sensing devices 24 have been described and illustrated, the present invention is not limited thereto but encompasses any and all equivalent structures known to those skilled in the respective arts. The pathways 25, 27, and 29, as well as the air supply conduit 22, are schematically illustrated and would include any appropriate conduit for the device chosen. For example, the conduits 25, 27 and 29 are preferably electrical cables or cords where the sensing devices 24 have electrical outputs and where the signal processor 26 and the controller 28 have electrical operating elements. For an analog control system, however, a fluidic computer might be used, or analog control elements could be used as well.

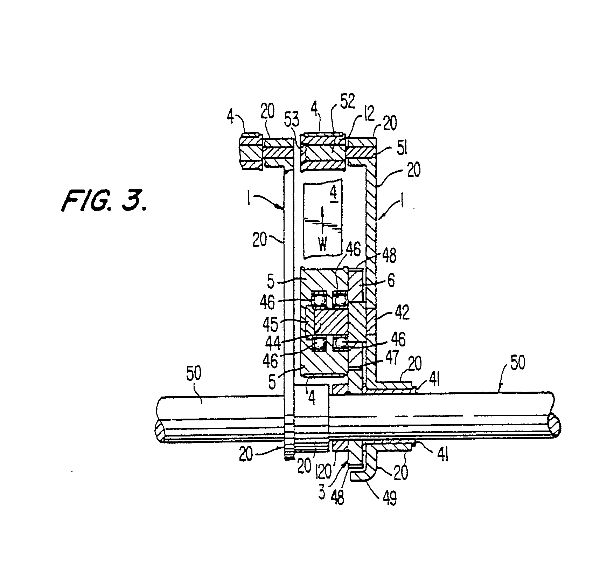

Figure 3 is a sectional side view of a diverting member 1 taken along the line 3-3 of figure 1. Also shown to the left in figure 3, in side elevational view partially broken away at the upper portion, is another diverting member 1, showing the nesting relationship of the adjacent diverting member 1 and also showing the clearance between an end of a belt-carrying roller 5 and the support plate 20 of the adjacent diverting member 1. Also shown broken way at each end is the drive shaft 50 which drives each of the respective gears 6 of the respective diverting members 1.

As seen in figure 3, the plate 20 has a collar portion 20 disposed about the shaft 50. In the preferred embodiment, a low-friction member 41, such as a nylon sleeve or the like, is fixed in between the collar of the member 20 in the shaft 50 to permit relative rotation between the shaft 50 and the plate 20.

The plate 20 supports a shaft 51 which is fixed thereto, the shaft 51 rotatably supporting the roller 12. This is schematically indicated in figure 3, with a cross-section of the flat belt 4 being visible atop the roller 12 in figure 3. A portion of the belt 4, partially broken away at either end, is visible in figure 3 between roller 5 and 12. The roller 5 is mounted by bearings 46 to a shaft 44. An end member 45 retains the roller 5 in a position along the shaft 44. A shaft 42 is connected to the shaft 44 as well as rotatably supporting the gear 6. The gear 6 meshes with the gear 3 which is pinned or welded to the shaft 50. Any means of attachment of the gear 3 may be used, such as keying, glueing, ultrasonic welding or the like, which are within the ambit of a skilled artisan.

The collar portion of the plate 20 serves to maintain the plate 20 against angular movement relative to the shaft except for rotational movement within a plane perpindicular to the axis of the shaft as indicated in figure 1. Thus, the plate 20 can rotate about the shaft 50 in a single plane between the two positions shown in figure 1 namely the solid position and a dotted-outline position.

The gear 3 is retained also by a collar 120 which prevents sliding movement along the shaft 50. There is a clearing between the top of the collar 120 and the belt 4 just above it as seen in figure 3. Thus, there is a clearance for replacing a belt 4, the clearance being between adjacent diverting members 1 as well as between the bottom of the roller 5 and the top of the collar portion of support member 20, as well as the top of the collar 120 as seen in figure 3. Thus, a belt can be placed around the rollers 11, 12, 13, and 5 without removal of any parts or elements of the diverting members 1, and does not require removal of the shaft 50. This is despite the very close spacing between adjacent diverting members 1 which is seen in figure 3. This close spacing of belts 4 atop the diverting members 1 is necessary where there are closely spaced articles arriving from the conveyor belt 21 (shown in figure 2).

The roller 12 is mounted in a similar manner to the rollers 11 and 13, which is shown in figure 3 as including a support shaft 52 which is rotatable relative to the roller 12, and a stop member 53 which retains the roller 12 on the shaft 52. The shaft 52 can be made of a low-friction material such as Teflon, nylon, or the like, or it may include ball bearings or other bearing surfaces such as a journal bearing. Furthermore, the shaft 52 may be integral with the roller 12 and the shaft 51 then be made rotatable and journaled or otherwise made rotatable relative to the plate 20 within which it is received.

Figure 4 is a front elevational view of a support member 125 which is similar to that shown in figure 1. Here, instead of a roller, there is a sprocket gear 500 for engaging a chain 400. The chain 400 can be composed of links, such as is commonly used as a bicycle chain. In the embodiment shown in figure 4, there are no other rotating members supporting the chain 400. Rather, the chain 400 is slidably supported upon the reels 701 and 131 of the respective support members 120 and 130. The support member 120 has an upstanding raised rail 701. The round support member 130 has an upstanding raised ridge 131 therein. The apparatus shown in figure 4 is for a single chain. However, a pair of chains can also be used, in which case the second chain, and the second raised ridges corresponding to ridges 701 and 131 would be concealed from view in figure 4 by the first chain and supports for the first chain 400.

The support member 125 in figure 4 has an opening 150 for receiving a shaft therethrough. Also, a bore 130 is formed in the support member 125 for receiving a pin, so that a reciprocating member such as is shown in figure 1 can be attached therethrough. The support member 125 has an upstanding chain support portion 120 affixed thereto so that the upstanding support portion 120 moves with the support plate 125. The sprocket gear 500 is rotatably mounted to the support member 125. Such rotatable mounting is conventional and well-known in the gear arts.

Figure 5 is a side elevational view, taken in section, along line 5-5 of figure 4 . Here, details of the chain 400 itself are visible. As seen, the chain links of the chain 400 are formed by an inside pair of connecting members 601 and 605 and by an outer pair of linked connecting members 603 and 604. A plurality of pins 600 are used to connect the chain links together and to ride upon the upper surface 701 of the guide 700. The pins 600 connect the link walls 603, 601, 605, and 604 to one another and separate these side walls from one another by a predetermined distance, as is conventional in the link-chain art, such chains being commonly found in bicycles, and other chain-driven apparatus.

As seen in figure 5, the lowermost edges of the sidewalls 603, 604, and 605 do not touch the uppermost surface of the block 120 due to the support of the pins 600 by the uppermost surface 701 of the upstanding guides 700. As seen in figure 5, a pair of such guides 700, 700 are used to support a pair of chains 400, 400.

It is contemplated as being within the scope of the present invention that any number of raised guides 700 could be used for supporting any number of chains 400. The materials preferably used for supporting the chain is Acetal, which is sold under a variety of commercial names and in a variety of grades. In particular, a suitable type of Acetal is sold under the tradenames of Lennite or Delrin. This type of plastic is sufficiently wear-resistant that the chain 400 slides thereover without wearing the plastic surface of the supports 120 or 130.

By the present invention a chain is used and supported in novel way rather merely by rollers, and such raised guides for supporting such a chain have advantages over the prior art which employs rollers. Where rollers are used for supporting a chain, the rollers can wear out, as can the axles supporting the rollers. Furthermore, the constant impact of the rollers against the different chain links as the chain moves at a predetermined velocity causes wear to both the chain and the roller surface. By the present invention, such wear is avoided and reliability is significantly increased.

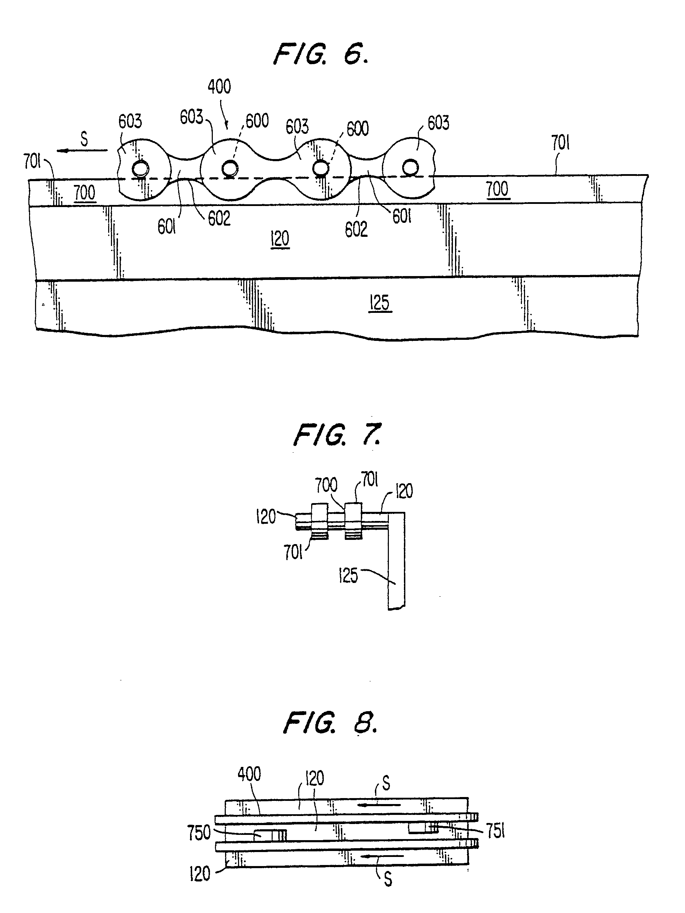

Figure 6 is a side elevational view showing the detailed structure of the chain links described with respect to figure 5 and showing the support upon the uppermost surface 701 of the guide 700. As seen in figure 6, the pins 600 ride along the surface 701, the chain 400 moving with a velocity 5 in figure 6.

Figure 7 is a right-hand side elevational view of the support portion 120 and support plate 125 as seen in elevation view without any chains thereon. As seen, the upstanding guide surfaces 701 and the upstanding guides 700 are clearly seen in this figure as being curved about the end portions of the support 120. Also, as seen in figure 7, the support portion 120 is fixedly connected to the support plate 125. In a preferred embodiment, the support plate 125 is integrally molded or cast together with the support portion 120. Alternatively, the support plate 125 and support 120 can be machined from a solid block of material as described above, or the support member 120 can be attached as by screws, bolts, or the like to the support plate 125.

It is contemplated as being within the scope of the present invention to provide that only the upstanding support portions 700, having uppermost surfaces 701, and the upstanding guide 131 of the support portion 130 of figure 4 of the Acetal material used. As described above, preffered commercial varieties of such plastic are known as Lennite or Delrin. Such a plastic is a hard plastic and resists wear.

Figure 8 is a top elevational view of the chain support 120, showing a pair of support cleaning elements 750, 751 associated with each respective chain 400.

The cleaning elements 750, 751 are staggered, and because each chain moves at the same speed S, the cleaning elements 750, 751 do not collide. Each element 750, 751 is preferably another link of chain attached to the side of the respective chain 400. Alternatively, any other attachable member can be used to clean the support 120 of detritus and debris.

The improved selective diverting devices of the present invention are capable of achieving the above-enumerated advantages and results, and while preferred embodiments of the present invention have been disclosed, it will be understood that it is not limited thereto but may be otherwise embodied within the scope of the following claims.

## Claims

1. A diverting conveyor for selectively diverting articles (10) from a conveyor path (21) to a second location (V) where the diverting conveyor includes a movable support member (125) having a drive sprocket (500) and a conveyor chain support (120) mounted thereon; a continuous conveyor means (400) disposed on the drive sprocket and conveyor chain support (120) to form a continuous closed loop and define a diverting conveying surface; actuator means (9) to move the movable support member (125) and diverting conveying surface from a first conveying position to a second conveying position to selectively divert articles from the conveyor path to the second location; a drive means (3, 50) in a continuous driving relationship with the drive sprocket (500), characterized in that the conveyor means is a continuous conveyor chain (400) received on the conveyor chain support (120), wherein the support member (125) and conveyor chain support (120) is a solid block and said drive means is disposed outside the closed loop of the conveyor chain (400), and wherein the drive sprocket (500) is rotatably mounted to the support member (125) and extends essentially perpendicular from the support member such that the continuous conveyor chain (400) can be removed or replaced without disassembly of the diverting conveyor.

2.   The diverting conveyor of claim 1 further characterized in that said conveyor chain support (120) includes a guide rail (701) for receiving said chain.

3.   The diverting conveyor of claim 1 further characterized in that said chain (400) includes at least one cleaning element (751) fixed to the side of said chain whereby debris is removed from the support (120) during movement of the chain.

4.   The diverting conveyor of claim 1 characterized in that the drive means (3, 50) is a rotatable drive shaft essentially parallel to the axis of the drive sprocket (500) and operatively connected thereto.

5.   The diverting conveyor of claim 4 characterized in that the drive shaft includes a drive gear (3) mounted on the rotatable drive shaft (50) and is operatively connected to a gear (6) connected to the drive sprocket (500) mounted to the support member.

6.   The diverting conveyor of claim 1 characterized in that the actuating means (9) is a double-acting pneumatic cylinder and is selectively actuable between an extended position and a retracted position.

7.   The diverting conveyor of claim 1 characterized in that a plurality of parallel spaced-apart independently movable support members (125) are provided, each of said support members having at least one rotatable drive sprocket (500) and a conveyor chain support (120) extending perpendicular from the plane of the support member (125) and supporting the conveyor chain (400), the support members (125) being spaced apart a sufficient distance such that the conveyor chain (400) can be removed or replaced without disassembly of the diverting conveyor.

8.   The diverting conveyor of claim 7 characterized in that the drive means (3, 50) includes a drive shaft (50) having a plurality of drive gears and each drive sprocket (500) includes a gear (48) fixed at the end thereof and is operatively connected to one of the plurality of drive gears (3).

9.   The diverting conveyor of claim 8 characterizd in that the support members (125) are pivotally mounted to the drive shaft (50) such that the support members (125) are pivotable about the drive shaft (50) between the first conveying position to the second conveying position.

10.  The diverting conveyor of claim 1 characterized in that the conveyor chain support (120) includes two parallel guide rails (701) to support a pair of cooperating conveyor chains (400).

11.  The diverting conveyor of claim 1 characterized in that said drive sprocket (500) and conveyor chain support (120) are arranged to define a first conveying run of the conveyor chain (400) over the conveyor chain support (120) and a second conveying run of the conveyor chain (400) extending from the conveyor chain support (120) to the drive sprocket (500).

12.  The diverting conveyor of claim 1 further characterized in that the conveyor includes a sensing means (24) to detect a preselected characteristic of an article (10) being conveyed in the conveyor path (21) and to produce a first signal corresponding to said characteristic, a signal processor (26) to receive said first signal and to produce a second signal, and a control means (28) to receive said second signal and selectively actuate the actuator means (9) of one or more of the diverting conveyors.

13.  The diverting device of claim 1 wherein the support member (125) is pivotal about the drive shaft (50) and pivotal from the first conveying position to the second conveying position.

**Revendications**

1. Transporteur de dérivation pour détourner, de façon sélective, des articles (10) d'une voie de transport (21) vers un second endroit (V), le transporteur de dérivation comportant un organe de support mobile (125) ayant un pignon d'entraînement (500) et un support de chaîne de transport (120) monté sur celui-ci; des moyens de transport continus (400) disposés sur le pignon d'entraînement et le support de chaîne de transport (120) pour former une boucle fermée continue et définir une surface de transport de dérivation; des moyens d'actionnement (9) pour déplacer l'organe de support mobile (125) et la surface de transport de dérivation d'une première position de transport vers une seconde position de transport pour détourner, de façon sélective, des articles de la voie de transport vers le second endroit; des moyens d'entraînement (3,50) en relation d'entraînement continue avec le pignon d'entraînement (500),
caractérisé en ce que les moyens de transport sont une chaîne de transport continue (400) reçue sur le support de chaîne de transport (120), l'organe de support (125) et le support de chaîne de transport (120) étant un bloc plein et lesdits moyens d'entraînement étant disposés à l'extérieur de la boucle fermée de la chaîne de transport (400), et le pignon d'entraînement (500) étant monté, de façon rotative, sur l'organe de support (125) et s'étendant essentiellement perpendiculairement à partir de l'organe de support, de sorte que la chaîne de transport continue (400) peut être retirée ou remplacée sans démontage du transporteur de dérivation.

2. Transporteur de dérivation selon la revendication 1, caractérisé de plus en ce que ledit support de chaîne de transport (120) inclut un rail de guidage (701) pour recevoir ladite chaîne.

3. Transporteur de dérivation selon la revendication 1, caractérisé de plus en ce que ladite chaîne (400) inclut au moins un élément de nettoyage (751) fixé sur le côté de ladite chaîne, grâce à quoi des débris sont retirés du support (120) pendant le déplacement de la chaîne.

4. Transporteur de dérivation selon la revendication 1, caractérisé en ce que les moyens d'entraînement (3,50) sont un arbre d'entraînement rotatif essentiellement parallèle à l'axe du pignon d'entraînement (500) et relié, de façon opérante, à celui-ci.

5. Transporteur de dérivation selon la revendication 4, caractérisé en ce que l'arbre d'entraînement comporte une roue dentée d'entraînement (3) montée sur l'arbre d'entraînement rotatif (50) et est relié, de façon opérante, à une roue dentée (6) reliée au pignon d'entraînement (500) monté sur l'organe de support.

6. Transporteur de dérivation selon la revendication 1, caractérisé en ce que les moyens d'actionnement (9) sont un vérin pneumatique à double effet, qui peut être commandé, de façon sélective, entre une position d'extension et une position rétractée.

7. Transporteur de dérivation selon la revendication 1, caractérisée en ce qu'une pluralité d'organes de support (125) déplaçables indépendamment, espacés et parallèles sont prévus, chacun desdits organes de support ayant au moins un pignon d'entraînement rotatif (500) et un support de chaîne de transport (120) s'étendant perpendiculairement à partir de plan de l'organe de support (125) et supportant la chaîne de transport (400), les organes de support (125) étant espacés d'une distance suffisante, telle que la chaîne de transport (400) peut être retirée ou remplacée sans démontage du transporteur de dérivation.

8. Transporteur de dérivation selon la revendication 7, caractérisé en ce que les moyens d'entraînement (3,50) comportent un arbre d'entraînement (50) ayant une pluralité de roues dentées et chaque pignon d'entraînement (500) comprend une roue dentée (48) fixée à son extrémité et est relié, de façon opérante, à l'une desdites roues dentées d'entraînement (3).

9. Transporteur de dérivation selon la revendication 8, caractérisé en ce que les organes de support (125) sont montés, de façon pivotante, sur l'arbre d'entraînement (50) de sorte que les organes de support (125) peuvent pivoter autour de l'arbre d'entraînement (50) entre la première position de transport et la seconde position de transport.

10. Transporteur de dérivation selon la revendication 1, caractérisé en ce que le support de chaîne de transport (120) inclut deux rails de guidage parallèles (701) pour supporter une paire de chaînes de transport coopérantes (400).

11. Transporteur de dérivation selon la revendication 1, caractérisé en ce que ledit pignon d'entraînement (500) et le support de chaîne de transport (120) sont agencés pour définir un premier parcours de la chaîne de transport (400) au-dessus du support de chaîne de transport (120) et un second parcours de la chaîne de transport (400) s'étendant du support de chaîne de transport (120) au pignon d'entraînement (500).

12. Transporteur de dérivation selon la revendication 1, caractérisé de plus en ce que le transporteur comporte des moyens de détection (24) pour détecter une caractéristique présélectionnée d'un article (10) qui est transporté sur la voie de transport (21) et pour produire un premier signal correspondant à ladite caractéristique, un dispositif de traitement de signaux (26) pour recevoir ledit premier signal et pour produire un second signal, et des moyens de commande (28) pour recevoir ledit second signal et actionner, de façon sélective, les moyens d'actionnement (9) d'un ou plusieurs des transporteurs de dérivation.

13. Transporteur de dérivation selon la revendication 1, dans lequel l'organe de support (125) peut pivoter autour de l'arbre d'entraînement (50) et peut pivoter de la première position de transport vers la seconde position de transport.

**Ansprüche**

1. Ablenkförderer zum selektiven Ablenken von Gegenständen (10) von einem Förderweg (21) zu einer zweiten Stelle (V), wobei der Ablenkförderer aufweist: ein bewegbares Tragelement (125), auf dem ein Antriebs-Kettenrad (500) und ein Förderkettenträger (120) montiert sind; eine endlose Fördereinrichtung (400), die auf dem AntriebsKettenrad und dem Förderkettenträger (120) angeordnet ist, um eine endlose geschlossene Schleife zu bilden und eine Ablenkförderfläche zu bilden; Betätigungsmittel (9) zum Bewegen des bewegbaren Tragelementes (125) und der Ablenkförderfläche aus einer ersten Förderposition in eine zweite Förderposition, um selektiv Gegenstände aus dem Förderweg zur zweiten Stelle abzulenken; eine Antriebseinrichtung (3, 50), die in einer kontinuierlichen Antriebsverbindung mit dem Antriebs-Kettenrad (500) steht, dadurch gekennzeichnet, daß die Fördereinrichtung eine endlose Förderkette (400) ist, die auf dem Förderkettenträger (120) aufgenommen ist, daß das Tragelement (125) und der Förderkettenträger (120) ein fester Block sind und die Antriebseinrichtung außerhalb der geschlossenen Schleife der Förderkette (400) angeordnet ist, und daß das Antriebs-Kettenrad (500) am Tragelement (125) drehbar montiert ist und sich vom Tragelement im wesentlichen senkrecht derart wegerstreckt, daß die endlose Förderkette (400) entfernt oder ersetzt werden kann, ohne den Ablenkförderer auseinandernehmen zu müssen.

2. Ablenkförderer nach Anspruch 1, dadurch gekennzeichnet, daß der Förderkettenträger (120) eine Führungsschiene (701) zur Aufnahme der Kette aufweist.

3. Ablenkförderer nach Anspruch 1, dadurch gekennzeichnet, daß die Kette (400) zumindest ein Reinigungselement (751) aufweist, das an der Seite der Kette montiert ist, so daß Rückstände vom Träger (120) während der Bewegung der Kette entfernt werden.

4. Ablenkförderer nach Anspruch 1, dadurch gekennzeichnet, daß die Antriebseinrichtung(3,50) eine drehbare Antriebswelle ist, die im wesentlichen parallel zur Achse des Antriebs-Kettenrades (500) verläuft und mit diesem in Antriebsverbindung steht.

5. Ablenkförderer nach Anspruch 4, dadurch gekennzeichnet, daß die Antriebswelle ein Antriebszahnrad (3) aufweist, das auf der drehbaren Antriebswelle (50) montiert ist und mit einem Zahnrad (6) in Antriebsverbindung steht, das mit dem am Tragelement montierten Antriebs-Kettenrad (500) in Antriebsverbindung steht.

6. Ablenkförderer nach Anspruch 1, dadurch gekennzeichnet, daß die Betätigungseinrichtung (9) ein doppeltwirkender pneumatischer Zylinder und selektiv zwischen einer ausgefahrenen Position und einer zurückgezogenen Position betätigbar ist.

7. Ablenkförderer nach Anspruch 1, dadurch gekennzeichnet, daß eine Vielzahl von parallelen, mit Abstand voneinander angeordneten, unabhängig bewegbaren Tragelementen (125) vorgesehen ist, wobei jedes dieser Tragelemente zumindest ein drehbares Antriebs-Kettenrad (500) und einen Förderkettenträger (120) aufweist, der sich von der Ebene des Tragelementes (125) senkrecht wegerstreckt und die Antriebskette (400) abstützt, wobei die Tragelemente (125) in einem ausreichenden gegenseitigen Abstand liegen, derart, daß die Förderkette (400) entfernt oder ersetzt werden kann, ohne den Ablenkförderer auseinandernehmen zu müssen.

8. Ablenkförderer nach Anspruch 7, dadurch gekennzeichnet, daß die Antriebseinrichtung (3, 50) eine Antriebswelle (50) aufweist, die eine Vielzahl von Antriebszahnrädern hat und jedes Antriebs-Kettenrad (500) ein am Ende desselben befestigtes Zahnrad (48) aufweist, das mit einem der Vielzahl von Antriebszahnrädern (3) in Antriebsverbindung steht.

9. Ablenkförderer nach Anspruch 8, dadurch gekennzeichnet, daß die Tragelemente (125) an der Antriebswelle (50) schwenkbar montiert sind, derart, daß die Tragelemente (125) um die Antriebswelle (50) zwischen der ersten Förderposition und der zweiten Förderposition schwenkbar sind.

10. Ablenkförderer nach Anspruch 1, dadurch gekennzeichnet, daß der Förderkettenträger (120) zwei parallele Führungsschienen (701) aufweist, um ein Paar von zusammenwirkenden Förderketten (400) abzustützen.

11. Ablenkförderer nach Anspruch 1, dadurch gekennzeichnet, daß das Antriebszahnrad (500) und der Förderkettenträger (120) so angeordnet sind, daß sie ein erstes Fördertrum der Förderkette (400) über dem Förderkettenträger (120) sowie ein zweites Fördertrum der Förderkette (400) bilden, das sich vom Förderkettenträger (120) zum Antriebs-Kettenrad (500) erstreckt.

12. Ablenkförderer nach Anspruch 1, dadurch gekennzeichnet, daß er Fühlmittel (24) zum Feststellen eines vorbestimmten Merkmals eines auf dem Förderweg (21) beförderten Gegenstandes (10) und zur Erzeugung eines diesem Merkmal entsprechenden ersten Signals, einen Signalprozessor (26) zur Aufnahme des ersten Signales und zur Erzeugung eines zweiten Signales sowie Steuermittel (28) zur Aufnahme des zweiten Signales und zur selektiven Betätigung der Betätigungsmittel (9) eines oder mehrerer der Ablenkförderer aufweist.

13. Ablenkvorrichtung nach Anspruch 1, bei welcher das Tragelement (125) um die Antriebswelle (50) und aus der ersten Förderposition in die zweite Förderposition schwenkbar ist.

FIG. 1.

FIG. 2.

# FIG. 3.

# FIG. 4.

# FIG. 5.

## FIG. 6.

## FIG. 7.

## FIG. 8.